Europäisches Patentamt

European Patent Office

Office européen des brevets

(19)

(11) EP 1 058 474 A1

(12) EUROPEAN PATENT APPLICATION

(43) Date of publication:
06.12.2000 Bulletin 2000/49

(51) Int Cl.$^7$: H04Q 7/38

(21) Application number: 99440130.5

(22) Date of filing: 03.06.1999

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | • **Mortensen, Ivar, Dr.**<br>**70825 Korntal (DE)**<br><br>(74) Representative: **Scheer, Luc et al**<br>**ALCATEL,**<br>**Intellectual Property Department,**<br>**Postfach 300 929**<br>**70449 Stuttgart (DE)** |
| (71) Applicant: **ALCATEL**<br>**75008 Paris (FR)** | |
| (72) Inventors:<br>• **Jeschke, Michael**<br>**70197 Stuttgart (DE)** | Remarks:<br>Amended claims in accordance with Rule 86 (2) EPC. |

(54) **Cellular network with optimised mobile terminals/base stations links and method for determining the same**

(57) The present invention concerns a cellular network with optimised mobile terminals / base stations links and a method for determining the same.

Cellular radiocommunication network comprising a plurality of geographically spread out base stations (BS) with variable loading statuses, wherein the power ($P_{Btxi}$) transmitted by each base station ($BS_i$) on a corresponding communication control channel and receivable by mobile terminals (MT) to be connected with the network, is a function of the loading status of said base station ($BS_i$), the function being the same for all base stations (BS) of said network.

## Description

The present invention relates generally to cellular radiocommunication networks, more particularly to network organisation and handover procedures, and concerns a cellular network with optimised mobile terminals / base stations links and a method for determining the most suitable base station for a given mobile terminal.

In cellular radiocommunication networks, especially in Code Division Multiple Access (CDMA) networks, it is possible to define, for each base station, a so-called "prevailing zone" as the area around the base station such that any mobile inside this area requires less average transmitted power to reach that base station with its minimum required received power than to reach any other surrounding base station with its corresponding minimum required received power. Average transmitted power is considered as the transmitted power at the mobile, averaged over a fast fading period. Only path loss and slow fading (shadowing), together with the minimum required received power at each base station, have an influence on the average transmitted power. This prevailing zone is related to the loading status of the base station, but is also related to the loading status of surrounding base stations.

In order for such a cellular network, especially a CDMA network, to function in good conditions, there are two combined aspects that have to be taken into consideration simultaneously. The first one is the so-called "cell breathing" (the prevailing zone of the cell increases/decreases as its loading status decreases/increases in relation to loading status of surrounding cells), and the second one is the soft handover procedure, which must enable the connection of mobile terminals to different cells while entering and crossing their prevailing zones.

These two problems are combined and cannot be considered independently.

Indeed, a downlink broadcast channel should be able to reflect the increases and decreases of the cell prevailing zone following the fluctuations of the cell load, and of the load of surrounding cells. On the other hand, the soft handover procedure has to be performing enough to anticipate the increase and decrease of this prevailing zone.

From prior art it is known to measure the power level of the broadcast channel at each mobile terminal, or to measure the Energy per chip-Interference spectral density ratio (Ec/Io). These two methods are used to evaluate at which moment the soft handover procedure should be triggered.

However, no such concept of prevailing zone has been found in prior art, nor any proposal as how to treat, simultaneously, the two aforementioned problems.

It is an object of the present invention to propose a cellular radiocommunication network construction and a way of working the same which take into account these two aspects simultaneously, within a mutual dependent relation.

It is another object of the invention to minimise the uplink interference in such networks and to lower power consumption of the mobile terminals.

Therefore, the present invention concerns a cellular radiocommunication network comprising a plurality of geographically spread out base stations BS with variable loading statuses, wherein the power $P_{Btxi}$ transmitted by each base station $BS_i$ on a corresponding communication control channel and receivable by mobile terminals MT to be connected with the network, is a function of the loading status of said base station $BS_i$, the function being the same for all base stations BS of said network.

At this point it should be noted that the measurement to be made at the mobile terminals MT over the communication control channels coming from surrounding base stations BS is their power levels. This power level is the only measure that can be used as an indicator of the uplink loading status of the different cells forming the cellular network and therefore the sole indicator to determine the prevailing zone of each base station of said network.

According to a first embodiment of the invention and when the minimum required received powers $P_{Rs}$ for a given service of reference at the base stations BS reflect the loading statuses of said base stations BS, the power $P_{Btxi}$ transmitted by any base station $BS_i$ of said network is given by the following relation:

$$P_{Rsi} \times P_{Btxi} = K,$$

with $P_{Rsi}$ being the minimum required received power for a given service of reference at the base station $BS_i$ and with K being a predetermined constant identical for all base stations BS of said network.

According to a second embodiment of the invention, it can be provided that, for all base stations BS of said network, the power $P_{Btxi}$ transmitted by any base station ($BS_i$) is given by the following relation:

$$P_{Tot,\ BSi} \times P_{Btxi} = K',$$

with $P_{Tot, BSi}$ being the total power received by the base station $BS_i$ or the total interference seen by the cell corresponding to that base station $BS_i$ and K' being a predetermined constant identical for all base stations BS of said network.

When applied to a CDMA network, $P_{Btxi}$ corresponds to the power of the transmitted broadcasting control channel BCCH of the corresponding base station $BS_i$.

The present invention also includes a method for determining for a given mobile terminal in a cellular radiocommunication network the surrounding base stations BS requiring the lowest transmission powers from said mobile terminal for a working connection with said network, wherein said mobile terminal is repeating intermittently the following operations:

- measuring the power levels $P_{Brx}$ received on given communication control channels coming in from said surrounding base stations BS,
- comparing the measured power levels $P_{Brx}$ of the different surrounding base stations BS among themselves, and,
- selecting the base stations $BS_i$, whose received power levels $P_{Brxi}$ arc the greatests,

the power $P_{Btx}$, transmitted by any base station BS on a corresponding communication control channel and receivable by mobile terminals MT to be connected with the network, being a function of the loading status of said base station BS, the function being the same for all base stations of said network.

The features related to the two embodiments and their application to a CDMA network described beforehand in connection with a network according to the invention, can also be considered in relation with the preceding method.

Advantageously, the mobile terminal is also monitoring the values and/or the evolutions of the power offsets, for received powers on communication control channels, between the presently selected base station $BS_i$ and the other proximate base stations BS, depending on the movements of the mobile terminal and the changes in transmission conditions and sending a signal to the network controller each time one of said power offsets crosses a predetermined threshold value or predetermined threshold values.

According to a further aspect of the invention, there is also provided a method for controlling the handover procedure, between base stations of a CDMA type cellular radiocommunication network, of a traffic channel linking a mobile terminal to said network, wherein said mobile terminal is repeating in predetermined intervals the method steps described before in order to select the most suitable base stations $BS_i$ and to update the list of proximate base stations BS belonging to the active set, enabling the network controller to anticipate and prepare each handover procedure.

The present invention will be better understood thanks to the following description explaining the physical basis of the invention and a preferred embodiment of the latter as a non limitative example.

The basic problem to be solved by the invention is how to establish a relation between the handover zones and the borders between prevailing zones.

To do this, a relation between the transmitted power of the broadcast channel at each base station BS or base station BS and the loading status of its cell has been defined. This allows the network to define the limits of the prevailing zone of each base station by means of measurements of the received powers of the broadcast channel at the mobile terminals. The limit between two (three) prevailing zones is given by the line (point) in which a mobile would need the same averaged transmitted power to reach the two (three) base stations with their respective minimum required powers.

According to the basic principle of the invention, it is stated that the received downlink broadcast channel power levels coming from all concerned base stations defining these adjacent prevailing zones are the same at the limit between two or more prevailing zones. This relation allows the system to know in advance the limits between the prevailing zones by monitoring the power offset between the different broadcast channels, and anticipate the handover procedure to assure that the new base station is available in the active set when the mobile enters its prevailing zone.

Having a given base station in the active set of a mobile when it enters the prevailing zone of that base station assures that, at any time, the transmitted power of that mobile is the lowest possible, and therefore the global uplink interference level of the network is minimized.

The condition set by the invention can be formulated as follows: when at a given point in the network, a mobile terminal requires the same transmit power to reach two or more base stations with their respective minimum required received powers, the power levels of the broadcast channels received at this mobile terminal coming from all those involved base stations should be the same.

This condition can be represented in the following formal way:

If

$$P_{Ttxi} = P_{Ttxk} \tag{1}$$

Then

$$P_{Brxi} = P_{Brxk} \tag{2}$$

where

$P_{Ttxi}$ = Uplink traffic channel power level (tx) transmitted by the mobile towards the $BS_i$ to reach the base station with the minimum required power (dependent on $BS_i$ loading status).

$P_{Brxk}$ = Downlink broadcast channel power level (rx) received by the mobile coming from the $BS_k$.

By relating transmitted power to received power in the uplink, we can express:

$$P_{Trxi} = P_{Ttxi} \times PL_i \text{ and } P_{Trxk} = P_{Ttxk} \times PL_k \tag{3}$$

wherein $PL_i$ is the Path Loss between the mobile terminal and the $BS_i$, after filtering of fast fading (Rayleigh), which allows to state a symmetry between uplink and downlink pathlosses.

Now $P_{Trxi} = P_{Rsi}$, which represents the minimum required power at reception in the present loading conditions of $BS_i$.

The parameter $P_{Rs}$ is the result of a major characteristic of networks, especially CDMA type networks, stating that to be able to obtain the desired Eb/Io at the base station for each link, the power with which the different signals have to be received at the base station is the same for a given service of reference, and depends on the Eb/Io target, the external interference seen by the base station, the processing gain, the noise spectral density and the number of users in the cell. This $P_{RS}$ value can be constantly evaluated at the base station from the loading status of the cell.

Furthermore, it can be stated that:

$$P_{Btxi} = P_{Brxi} / PL_i \qquad (4)$$

because of the path loss symmetry stated before.

From (3) and (4) we express the traffic power level transmitted by the mobile as:

$$P_{Ttxi} = P_{Rsi} \times (P_{Btxi} / P_{Brxi}) \qquad (5)$$

Using equation (1) which defines prevailing zones limit, we get:

$$P_{Rsi} \times (P_{Btxi} / P_{Brxi}) = P_{Rsk} \times (P_{Btxk} / P_{Brxk}) \qquad (6)$$

Considering (6) in the light of condition (2) according to the invention, we arrive at:

$$P_{Rsi} \times P_{Btxi} = P_{Rsk} \times P_{Btxk} \qquad (7)$$

From (7), and knowing that this relation is true for any couple of base stations i and k, we can establish as a constraint for any base station BS in the network:

$$P_{Rsi} \times P_{Btxi} = K \qquad (8)$$

K being a constant for the whole network.

The value of the constant K has to be defined as a compromise value taking into account a good coverage of the network and a bearable interference level resulting from the powers transmitted over the BCCH channels.

It could be settled at network deployment after field trials in order to enable the network to build up optimum active sets of base stations for global uplink interference minimisation.

Optimal working of the invention requires a regular update of the minimum required received power $P_{RS}$ at each base station, and a consequent adaptation of the broadcast channel power. However, the time constant of these two processes is large enough (hundreds of milliseconds) not to induce a signalling overload into the network.

It should be noted that as, in a CDMA network, the ratio between $P_{Tot,BS}$ (total power received by the base station BS or total interference seen by the cell corresponding to that base station) and $P_{Rs}$ (for a given service of reference) is the same through out the whole network and it is therefore also possible to state that :

$$P_{Tot, BS} \times P_{Btx,BS} = K',$$

for any base station BS.

The present invention is, of course, not limited to the preferred embodiment described herein, changes can be made or equivalents used without departing from the scope of the invention.

**Claims**

1. Cellular radiocommunication network comprising a plurality of geographically spread out base stations (BS) with variable loading statuses, wherein the power ($P_{Btxi}$) transmitted by each base station ($BS_i$) on a corresponding communication control channel and receivable by mobile terminals (MT) to be connected with the network, is a function of the loading status of said base station ($BS_i$), the function being the same for all base stations (BS) of said network.

2. Cellular radiocommunication network according to claim 1, wherein, when the minimum required received powers ($P_{rs}$) for a given service of reference at the base stations (BS) reflect the loading statuses of said base stations (BS), the power ($P_{Btxi}$) transmitted by any base station ($BS_i$) of said network is given by the following relation :

$$P_{Rsi} \times P_{Btxi} = K,$$

with (PRsi) being the minimum required received power at the base station ($BS_i$) for a given service of reference and with (K) being a predetermined constant identical for all base stations (BS) of said network.

3. Cellular radiocommunication network according to claim 1, wherein, for all base stations (BS) of said network, the power ($P_{Btxi}$) transmitted by any base

station (BS$_i$) is given by the following relation:

$$P_{Tot, BSi} \times P_{Btxi} = K',$$

with (P$_{Tot, BSi}$) being the total power received by the base station (BS$_i$) or the total interference seen by the cell corresponding to that base station (BS$_i$) and (K') being a predetermined constant identical for all base stations (BS) of said network.

4. Cellular radiocommunication network according to anyone of claims 1 to 3, wherein, in a CDMA cellular network, (P$_{Btxi}$) corresponds to the power of the transmitted broadcasting control channel (BCCH) of the corresponding base station (BS$_i$).

5. Method for determining for a given mobile terminal in a cellular radiocommunication network the surrounding base stations BS requiring the lowest transmission powers from said mobile terminal for a working connection with said network, wherein said mobile terminal is repeting intermittently the following operations :

  - measuring the power levels (P$_{Brx}$) received on given communication control channels coming in from said surrounding base stations (BS),
  - comparing the measured power levels (P$_{Brx}$) of the different surrounding base stations (BS) among themselves, and,
  - selecting the base stations (BS$_i$), whose received power levels (P$_{Brxi}$) are the greatests,

    the power (P$_{Btx}$) transmitted by any base station (BS) on a corresponding communication control channel and receivable by mobile terminals (MT) to be connected with the network, being a function of the loading status of said base station (BS), the function being the same for all base stations of said network.

6. Method according to claim 5, wherein, when the minimum required received powers (P$_{rs}$) for a given service of reference at the base stations (BS) reflect the loading statuses of said base stations (BS), the power (P$_{Btxi}$) transmitted by any base station (BS$_i$) of said network is given by the following relation :

$$P_{Rsi} \times P_{Btxi} = K,$$

with (P$_{Rsi}$) being the minimum required received power at the base station (BS$_i$) and (K) being a predetermined constant, the same for all base stations (BS) of said network.

7. Method according to claim 7, wherein, for all base stations (BS) of said network, the power (P$_{Btxi}$) transmitted by any base station (BS$_i$) is given by the following relation:

$$P_{Tot, BSi} \times P_{Btxi} = K',$$

with (P$_{Tot, BSi}$) being the total power received by the base station (BS$_i$) or the total interference seen by the cell corresponding to that base station (BS$_i$) and (K') being a predetermined constant identical for all base stations (BS) of said network.

8. Method according to anyone of claims 5 to 7, wherein in a CDMA cellular network, (P$_{Btxi}$) corresponds to the power of the transmitted broadcasting control channel (BCCH) of the corresponding base station (BS$_i$).

9. Method according to anyone of claims 5 to 8, wherein the mobile terminal is also monitoring the values and/or the evolutions of the power offsets, for received powers on communication control channels, between the presently selected base station (BS$_i$) and the other proximate base stations (BS), depending on the movements of the mobile terminal and the changes in transmission conditions and sending a signal to the network controller each time one of said power offsets crosses a predetermined threshold value.

10. Method for controlling the handover procedure, between base stations of a CDMA type cellular radiocommunication network, of a traffic channel linking a mobile terminal to said network, wherein said mobile terminal is repeating in predetermined intervals the method steps according to anyone of claims 5 to 9 in order to select the most suitable base stations (BS$_i$) and to update the list of proximate base stations (BS) belonging to the active set, enabling the network controller to anticipate and prepare each handover procedure.

**Amended claims in accordance with Rule 86(2) EPC.**

1. Cellular radiocommunication network comprising a plurality of geographically spread out base stations (BS) with variable loading statuses, wherein the power (P$_{Btxi}$) transmitted by each base station (BS$_i$) on a corresponding communication control channel and receivable by mobile terminals (MT) to be connected with the network continuously decreases with the loading status of said base station (BS$_i$), said loading status having a fixed relationship to said power, said fixed relationship being the same for all base stations (BS) of said network.

**2.** Cellular radiocommunication network according to claim 1, wherein, when the minimum required received powers ($P_{rs}$) for a given service of reference at the base stations (BS) reflect the loading statuses of said base stations (BS), the power ($P_{Btxi}$) transmitted by any base station ($BS_i$) of said network is given by the following relation :

$$P_{Rsi} \times P_{BtXi} = K,$$

with ($PRsi$) being the minimum required received power at the base station ($BS_i$) for a given service of reference and with (K) being a predetermined constant identical for all base stations (BS) of said network.

**3.** Cellular radiocommunication network according to claim 1, wherein, for all base stations (BS) of said network, the power ($P_{Btxi}$) transmitted by any base station (BSi) is given by the following relation:

$$P_{Tot,BSi} \times P_{Btxi} = K',$$

with ($P_{Tot, BSi}$) being the total power received by the base station (BSi) or the total interference seen by the cell corresponding to that base station ($BS_i$) and (K') being a predetermined constant identical for all base stations (BS) of said network.

**4.** Cellular radiocommunication network according to anyone of claims 1 to 3, wherein, in a CDMA cellular network, ($P_{Btxi}$) corresponds to the power of the transmitted broadcasting control channel (BCCH) of the corresponding base station ($BS_i$).

**5.** Method for determining for a given mobile terminal in a cellular radiocommunication network the surrounding base stations BS requiring the lowest transmission powers from said mobile terminal for a working connection with said network, wherein said mobile terminal is repeting intermittently the following operations :

-   measuring the power levels ($P_{Brx}$) received on given communication control channels coming in from said surrounding base stations (BS),
-   comparing the measured power levels ($P_{Brx}$) of the different surrounding base stations (BS) among themselves, and,
-   selecting the base stations ($BS_i$), whose received power levels ($P_{Brxi}$) are the greatests,

the power ($P_{Btx}$) transmitted by any base station (BS) on a corresponding communication control channel and receivable by mobile terminals (MT) to be connected with the network being continuously decreasing with the loading status of said base station (BS), said loading status having a fixed relationship to said power, said fixed relationship being the same for all base stations (BS) of said network.

**6.** Method according to claim 5, wherein, when the minimum required received powers ($P_{rs}$) for a given service of reference at the base stations (BS) reflect the loading statuses of said base stations (BS), the power ($P_{BtXi}$) transmitted by any base station ($BS_i$) of said network is given by the following relation :

$$P_{Rsi} \times P_{Btxi} = K,$$

with ($P_{Rsi}$) being the minimum required received power at the base station ($BS_i$) and (K) being a predetermined constant, the same for all base stations (BS) of said network.

**7.** Method according to claim 7, wherein, for all base stations (BS) of said network, the power ($P_{Btxi}$) transmitted by any base station ($BS_i$) is given by the following relation:

$$P_{Tot,BSi} \times P_{Btxi} = K',$$

with ($P_{Tot, BSi}$) being the total power received by the base station ($BS_i$) or the total interference seen by the cell corresponding to that base station ($BS_i$) and (K') being a predetermined constant identical for all base stations (BS) of said network.

**8.** Method according to anyone of claims 5 to 7, wherein in a CDMA cellular network, ($P_{Btxi}$) corresponds to the power of the transmitted broadcasting control channel (BCCH) of the corresponding base station ($BS_i$).

**9.** Method according to anyone of claims 5 to 8, wherein the mobile terminal is also monitoring the values and/or the evolutions of the power offsets, for received powers on communication control channels, between the presently selected base station ($BS_i$) and the other proximate base stations (BS), depending on the movements of the mobile terminal and the changes in transmission conditions and sending a signal to the network controller each time one of said power offsets crosses a predetermined threshold value.

**10.** Method for controlling the handover procedure, between base stations of a CDMA type cellular radiocommunication network, of a traffic channel linking a mobile terminal to said network, wherein said mobile terminal is repeating in predetermined intervals the method steps according to anyone of claims 5 to 9 in order to select the most suitable base stations ($BS_i$) and to update the list of proximate base stations (BS) belonging to the active set, enabling the network controller to anticipate and prepare each handover procedure.

EP 1 058 474 A1

European Patent
Office

EUROPEAN SEARCH REPORT

Application Number

EP 99 44 0130

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 276 907 A (MEIDAN REUVEN) 4 January 1994 (1994-01-04) * column 7, line 4 - column 10, line 32 * | 1,4,5, 8-10 | H04Q7/38 |
| X | US 4 435 840 A (KOJIMA JUNICHIROH ET AL) 6 March 1984 (1984-03-06) * column 3, line 54 - column 5, line 58 * | 1,5,9 | |

TECHNICAL FIELDS
SEARCHED     (Int.Cl.7)

H04Q

The present search report has been drawn up for all claims

| Place of search | Date of completion of the search | Examiner |
|---|---|---|
| THE HAGUE | 6 September 1999 | Lopez-Pérez, M-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

8

## ANNEX TO THE EUROPEAN SEARCH REPORT
## ON EUROPEAN PATENT APPLICATION NO.

EP 99 44 0130

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-1999

| Patent document cited in search report | Publication date | Patent family member(s) | Publication date |
|---|---|---|---|
| US 5276907 A | 04-01-1994 | BR 9107266 A | 05-04-1994 |
| | | CA 2098579 A,C | 08-07-1992 |
| | | CN 1063790 A | 19-08-1992 |
| | | EP 0566674 A | 27-10-1993 |
| | | IL 100569 A | 29-06-1995 |
| | | JP 6504170 T | 12-05-1994 |
| | | KR 9702758 B | 10-03-1997 |
| | | MX 9200044 A | 01-07-1992 |
| | | WO 9212601 A | 23-07-1992 |
| US 4435840 A | 06-03-1984 | JP 1516439 C | 07-09-1989 |
| | | JP 58161542 A | 26-09-1983 |
| | | JP 63065247 B | 15-12-1988 |
| | | JP 1516441 C | 07-09-1989 |
| | | JP 58173925 A | 12-10-1983 |
| | | JP 63065248 B | 15-12-1988 |
| | | JP 1483437 C | 27-02-1989 |
| | | JP 57210739 A | 24-12-1982 |
| | | JP 63029862 B | 15-06-1988 |
| | | AU 546036 B | 08-08-1985 |
| | | AU 8509582 A | 06-01-1983 |
| | | CA 1176311 A | 16-10-1984 |